# EUROPEAN PATENT APPLICATION

(11) **EP 1 717 632 A1**
(43) Date of publication of application: **02.11.2006**
(21) Application number: 06113198.3
(22) Date of filing: 27.04.2006
(51) Int. Cl.: G02F 1/133, G02F 1/13357

(54) **Cooling arrangement for a liquid crystal display**

(30) Priority: 29.04.2005 KR 20050036097; 14.06.2005 KR 20050050970
(71) Applicant: Samsung Electronics Co., Ltd., Yeongtong-gu Suwon-city, Gyeonggi-do 442-742 (KR)
(72) Inventor: Kim, Won-nyun, Gyeonggi-do (KR)
(74) Representative: Robinson, Ian Michael

(57) **Abstract**

A cooling arrangement for a back-light (20) in a liquid crystal display (1), in which a heat-pipe (40,50) is arranged to be in thermal contact with both an LED lighting unit (22,23) and a supporting frame (30). Heat generated by the lighting unit is conveyed to the outside of the frame, so that aging effects in the back-light components (25) and in the display itself are reduced. The lighting unit is either edge-mounted with respect to a rectangular light-guide (21) or rear-mounted. Edge-mounted lighting units may be provided at opposite input faces (21a,21b) of the light-guide. The heat-pipe protrudes (42,43,54,55) from the frame and may be connected to a radiator (60,61) having cooling fins. An additional radiator (61) may be provided on an opposite side of the frame. A ventilating fan (70,71) may be arranged to cool the radiator. In a further embodiment, a pump (85)-driven cooling circuit (81) is placed between the heat-pipe (45) and the radiator (83). Both heat-pipe and cooling circuit contain a thermally conductive fluid.

## Description

The present general inventive concept relates to a liquid crystal display (LCD), and more particularly, to a heat dissipation device to dissipate heat generated from a back light unit of an LCD to an area outside the LCD.

An LCD includes a liquid crystal panel having a thin film transistor substrate, a color filter substrate, and a liquid crystal injected between both substrates. The LCD further comprises a back light unit supplying light to the liquid crystal panel because the liquid crystal panel is a non-light emitting device. A transmittance of the light emitted from the back light unit is controlled by an arrange state of the liquid crystal.

Such a back light unit is referred to as a direct type back light unit and an edge type back light unit according to a position of a light source.

The edge type back light unit is generally used in a small sized LCD such as a monitor of a laptop computer, a monitor of a desktop computer, or a monitor of a portable terminal. Such a back light unit comprises a light guide plate, which is disposed at a rear of the liquid crystal panel, a lamp unit which is disposed along at least a lateral surface of the light guide plate and supplies light to the liquid crystal panel, and optical sheets which are disposed at an upper part of the light guide plate and diffuse or collect the light guided by the light guide plate to the liquid crystal panel. Here, the lamp unit is used with an Electro Luminescence (EL), a Cold Cathode Fluorescent Lamp (CCFL), a Hot Cathode Fluorescent Lamp (HCFL), an External Electrode Fluorescent Lamp (EEFL), a Light Emitting Diode (LED) and the like. With this configuration, the light emitted from the lamp unit may enter the liquid crystal panel as a path of the light is changed by the light guide plate and the optical sheets.

However, in this conventional LCD, a winkling is generated and formed at the light guide plate or the optical sheets by the heat generated at the lamp unit, so that brightness is deteriorated and a color shift is generated.

According to the present invention there is provided an apparatus and method as set forth in the appended claims. Preferred features of the invention will be apparent from the dependent claims, and the description which follows.

The present general inventive concept provides a liquid crystal display device which efficiently dissipates heat generated from a back light unit to the an area outside the back light unit.

Additional aspects and advantages of the present general inventive concept will be set forth in part in the description which follows and, in part, will be obvious from the description, or may be learned by practice of the general inventive concept.

The foregoing and/or other aspects of the present general inventive concept may be achieved by providing a liquid crystal display device comprising a liquid crystal panel that is used to form an image, a back light unit disposed at a rear portion of the liquid crystal panel and supplying light to the liquid crystal panel, a bottom chassis to accommodate the back light unit, and a heat pipe to dissipate heat generated from the back light unit to an area outside the bottom chassis.

The foregoing and/or other aspects of the present general inventive concept may also be achieved by providing a liquid crystal display device comprising a heat conductive member in thermal contact with a LED unit having a plurality of LEDs of a back light unit, a cooling duct in thermal contact with the heat conductive member and accommodated with a heat transfer fluid, a radiator connected with the cooling duct to receive heat, and a circulating pump that circulates the heat transfer fluid between the cooling duct and the radiator.

The foregoing and/or other aspects of the present general inventive concept may also be achieved by providing a liquid crystal display device comprising a back light unit having an LED unit having a plurality of LEDs, at least one heat conductive member in thermal contact with the LED unit, at least one set of heat dissipation fins in thermal contact with the heat conductive member to dissipate heat generated by the LED unit, at least one ventilating fan disposed adjacent to the at least one set of heat dissipation fins to circulate air and dissipate heat to an outside of the liquid crystal display device.

The foregoing and/or other aspects of the present general inventive concept may also be achieved by providing a display device comprising one or more covers, a display module disposed within an inside space provided by the one or more covers, and having a back light unit to generate light and a panel to form an image using the light, the back light unit having a light source to emit the light and a light guide panel to guide the emitted light to the panel, and a cooling unit disposed around the back light unit to discharge heat generated from at least one of the light source and the light guide panel to an outside of the display module

These and/or other aspects and advantages of the present general inventive concept will become apparent and more readily appreciated from the following description of the embodiments, taken in conjunction with the accompanying drawings of which:
Figure 1 is a perspective view illustrating an LCD according to an embodiment of the general inventive concept.
Figure 2 is a perspective view illustrating a liquid crystal (LC) module of the LCD of Figure 1;
Figure 3 is a cross-sectional view illustrating the LC module of Figure 2;
Figure 4 is a perspective view illustrating a light guide plate and a heat pipe of the LC module of figure 2;
Figure 5 is a perspective view illustrating a light guide plate and a heat pipe in a liquid crystal module of an LCD according to an embodiment of the general inventive concept;
Figure 6 is a perspective view illustrating a back light unit according to an embodiment of the general inventive concept;
Figure 7 is a perspective view illustrating the back light unit of Figure 6;
Figure 8 is a perspective view illustrating a ventilating fan of the back light unit of Figure 6; and
Figure 9 is a perspective view illustrating a heat pipe of the back light unit of Figure 6.

Reference will now be made in detail to the embodiments of the present general inventive concept, examples of which are illustrated in the accompanying drawings, wherein like reference numerals refer to like elements throughout. The embodiments are described below in order to explain the present general inventive concept by referring to the figures.

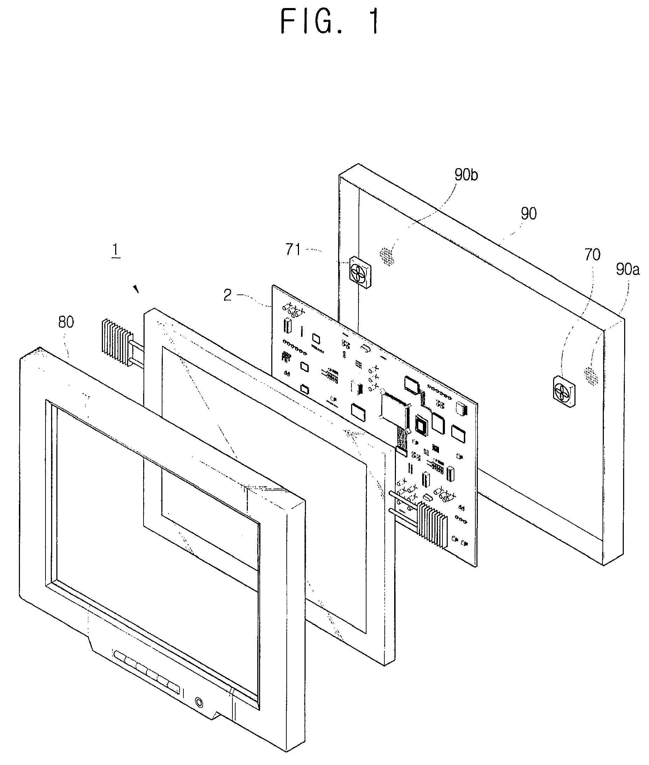

Figures 1 through 4 illustrate a liquid crystal display (LCD) according to an embodiment of present general inventive concept. Referring to Figures 1 to 4, the LCD comprises a front cover 80, a liquid crystal module 1, a main substrate 2, and a rear cover 90. The liquid crystal module 1 has a liquid crystal panel 10 to form an image. The back light unit 20 is disposed at a rear portion of the liquid crystal panel 10 to supply light to the liquid crystal panel 10. A bottom chassis 30 is disposed at a lower part of the back light unit 20 and accommodating the back light unit 20, and a top chassis 37 is disposed at an upper part of the liquid crystal panel 10 and coupled with the bottom chassis 30. The LCD further comprises heat pipes 40 and 50 to dissipate heat from the back light unit 20 to an area outside of the bottom chassis 30. The main substrate 2 applies a signal to the liquid crystal module 1. The front cover 80 is disposed at a front of the liquid crystal module 1 to cover the liquid crystal module 1, and a rear cover 90 is disposed at a rear portion of the main substrate 2 to cover the main substrate 2.

The liquid crystal panel 10 comprises a thin film transistor substrate 11, a color filter substrate 12, and a liquid crystal layer (not shown) injected between both substrates 11 and 12. The liquid crystal panel 10 forms the image according to an arrangement of the liquid crystal, and requires the back light unit 20 to provide a light source since the liquid crystal panel 10 is a non-light emitting device. Here, the liquid crystal panel 10 is disposed with a source printed circuit board (PCB) 13 and a gate PCB 14 to drive the liquid crystal panel 10.

Driving signals supplied from the source PCB 13 and the gate PCB 14 are applied to a data flexible circuit film 15 and a gate flexible circuit film 16, respectively, and are then applied to the liquid crystal panel 10. A data driving chip 15a and a gate driving chip 16a are mounted in the data flexible circuit film 15 and the gate flexible circuit film 16, respectively, to apply the driving signals supplied from the source PCB 13 and the gate PCB 14 to the liquid crystal panel 10.

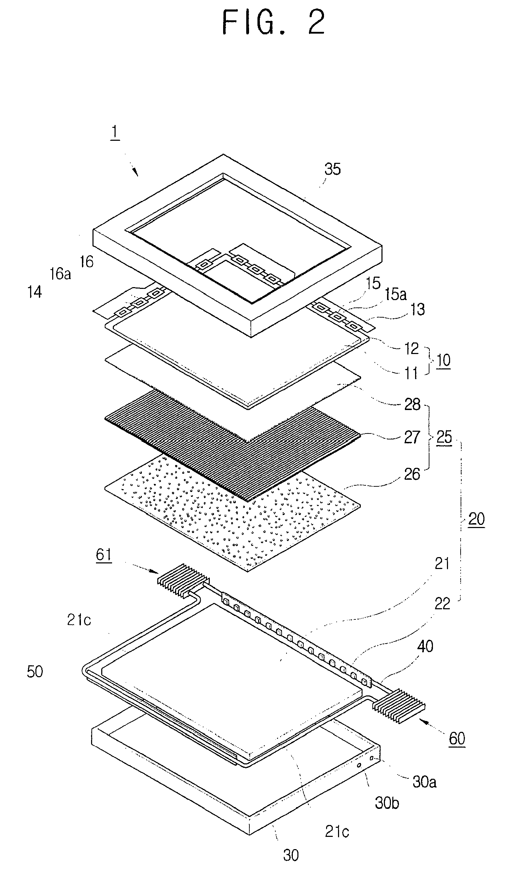

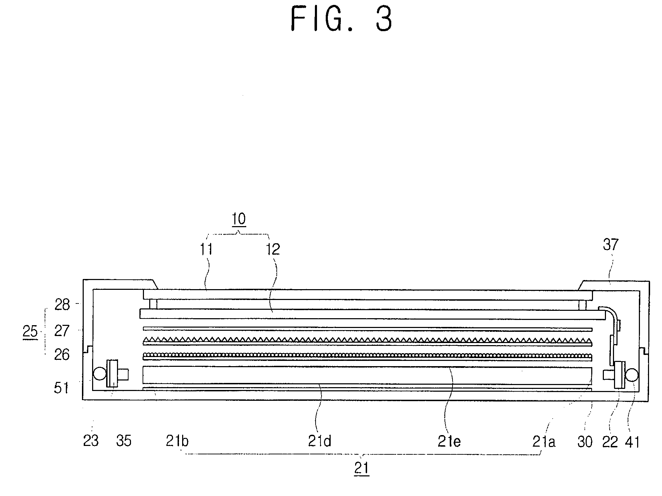

Referring to Figures 2 and 3, the back light unit 20 comprises a light guide plate 21 disposed at a rear portion of the liquid crystal panel 10 and having incident planes 21a and 21b, however, only one incident plane may be required when operating the back light unit 20. The back light unit 20 further includes LED units 22 and 23 provided along the incident planes 21a and 21b of the light guide plate 21 and supplying light to the liquid crystal panel 10, and optical sheets 25 disposed at an upper part of the light guide plate 21 to diffuse or collect the light guided from the LED units 22 and 23 to the light guide plate 21. The back light unit 20 is accommodated in the bottom chassis 30 disposed at a lower part of the LCD module. In a bottom portion of the bottom chassis 30 is accommodated a reflect sheet 35 that reflects leaked light, which is leaked in a reverse direction of the liquid crystal panel 10 among the light emitted from the LCD units 22 and 23, to the light guide plate 21.

The light guide plate 21 has an approximately rectangle plate shape. The light guide plate 21 comprises a pair of incident planes 21a and 21b provided opposite to each other to face corresponding ones of the LED units 22 and 23 to receive the light transmitted from the LED units 22 and 23, respectively, a reflecting plane 21d facing the reflect sheet 35 at a predetermined angle to reflect the incident light from the incident planes 21a and 21b, and an exit plane 21e facing a rear surface of the liquid crystal panel 10 so that the light may exit towards the liquid crystal panel 10.

The pair of incident planes 21a and 21b of the light guide plate 21 may be referred to as an upper incident plane 21a and a lower incident plane 21b. The upper incident plane 21a is disposed opposite to the LED unit 22, which may be denoted as the upper LED unit, and the lower incident plane 21b is disposed opposite to the LED unit 23, which may be denoted as the lower LED unit.

The upper and lower LED units 22 and 23 are provided as a pair of LED units. The upper LED unit 22 emits the light to the upper incident plane 21a, and the lower LED unit 23 emits the light to the lower incident plane 21b. In each LED unit 22 and 23 is aligned an LED part, which may be mixed with a red (R), green (G), and blue (B) color to emit white light along each of the incident planes 21a and 21b.

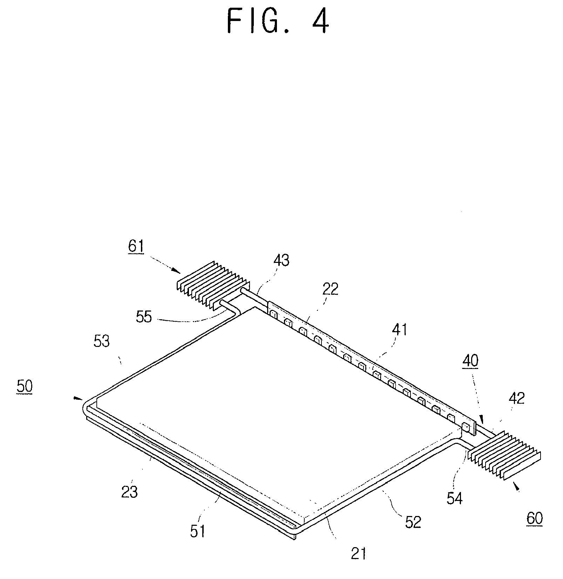

Figure 4 illustrates a pair of heat pipes 40 and 50 that correspond to each LED unit 22 and 23, respectively. The upper heat pipe 40 contacts the upper LED unit 22, and the lower heat pipe 50 contacts the lower LED unit 23.

The upper heat pipe 40 comprises an upper LED contact part 41 that may contact a front surface of the upper LED unit 22, and upper exposing parts 42 and 43 extended from both end sides of the upper LED contact part 41 and exposed to an outside of the bottom chassis 30. The upper heat pipe 40 may be disposed parallel to the upper LED unit 22 and coupled in parallel with the upper LED unit 22. The heat generated from the upper LED unit 22 transfers along the upper LED contact part 41 to the upper exposing parts 42 and 43 and is discharged to the outside of the bottom chassis 30.

The end sides of the upper heat pipe 40 (i.e., the upper exposing parts 42 and 43) may be coupled to a plurality of heat dissipation fins 60 and 61, respectively. Therefore, a sectional area of the upper exposing parts 42 and 43 and/or of the heat dissipation fins 60 and 61 to discharge the heat increases, so that the heat dissipation may be more efficiently accomplished by the plurality of heat dissipation fins 60 and 61.

Referring to Figure 4, the lower heat pipe 50 comprises a first conductive part 51 which may contact a front surface of the lower LED unit 23, and conduct the heat generated from the lower LED unit 23. The lower heat pipe 50 further includes a pair of second conductive parts 52 and 53 extended from end sides of the first conductive part 51 to contact laterals 21c adjacent to each respective incident planes 21a and 21b of the light guide plate 21, and third conductive parts 54 and 55 extended from each second conductive part 52 and 53 and exposed to the outside of the bottom chassis 30. Therefore, the heat generated from the lower LED unit 23 is transferred from the first conductive part 51 and the second conductive parts 52 and 53 to the third conductive parts 54 and 55, thereby discharging the heat to the area outside the bottom chassis 30. The second conductive parts 52 and 53 of the lower heat pipe 50 are bent upwardly in an approximately vertical direction, and thus fluid inside the lower heat pipe 50 may flow relatively smooth. That is, if the lower heat pipe 50 absorbs heat from the lower LED unit 23, liquids inside of the lower heat pipe 50 may be changed into gases. At this time, the gases may move smoothly in an upwardly direction guided by the second conductive parts 52 and 53 to dissipate heat to the outside of the bottom chassis 30, and the liquids may then promptly return to the first conductive part 51 by gravity, thereby enhancing heat conductive efficiency.

The second conductive parts 52 and 53 are in contact with the laterals 21c adjacent to respective incident planes 21a and 21b of the light guide plate 21, and thus the heat present in the laterals 21c of the light guide plate 21 may be efficiently discharged to the outside.

The end sides of the lower heat pipe 50 (i.e., the third conductive parts 54 and 55) may be coupled to corresponding ones of the plurality of heat dissipation fins 60 and 61. Therefore, a sectional area thereof increases as approaching the heat dissipation fins 60 and 61, and thus the heat dissipation may be accomplished more efficiently by the plurality of heat dissipation fins 60 and 61.

Each of the plurality of heat dissipation fins 60 and 61 is formed with an upper side pass through hole (not shown) and a lower side pass through hole (not shown) so that the upper heat pipe 40 and the lower heat pipe 50 can penetrate the heat dissipation fins 60 and 61. The heat pipes 40 and 50, and the heat dissipation fins 60 and 61 can be collectively referred to as a cooling unit to discharge the heat generated from the LED 22 and/or the light guide panel 21 to an outside of the LCD module 1, of an outside of the liquid crystal panel.

As illustrated in Figure 1, the LCD further comprises ventilating fans 70 and 71, which may be disposed adjacent to the heat dissipation fins 60 and 61. The ventilating fans 70 and 71 discharge the heat to an outside thereof more efficiently by forcibly ventilating the conducted heat from the heat dissipation fins 60 and 61. The rear cover 90 is formed with airing holes 90a and 90b which allow air to enter and/or exit the LCD, and correspond to positions of the ventilating fans 70 and 71. Also, the ventilating fans 70 and 71 allow the air to contact an area between the heat dissipation fins 60 and 61.

Referring to Figure 3, the optical sheets 25 comprise a diffusion film 26 which is disposed at the upper part of the light guide plate 21, and is formed with a bead shaped coating layer to diffuse the incident light from the light guide plate 21, and may include two or three overlapping sheets, a prism film 27 which is disposed at an upper part of the diffusion film 26 and collects the light in a direction vertical to a plate surface of the liquid crystal panel 10, and a protecting film 28 which is provided between the liquid crystal panel 10 and the prism film 27 and protects the liquid crystal panel 10.

When the prism film 27 includes two sheets, a direct prism film and a reverse prism film may be used as the two sheets. A micro prism is formed on each prism film at a predetermined angle. Therefore, the incident light from the diffusion film 26 is processed in a perpendicular direction with respect to the position of the liquid crystal panel 10, thereby maintaining uniform brightness.

Referring to Figure 2, the bottom chassis 30 has a rectangle shape, and accommodates the liquid crystal panel 10 and the back light unit 20. The bottom chassis 30 is formed with exposing holes 30a and 30b which allow the upper exposing parts 42 and 43 of the upper heat pipe 40 and the third conductive parts 54 and 55 of the lower heat pipe 50 to be exposed to the outside of the bottom chassis 30, as illustrated in Figure 2.

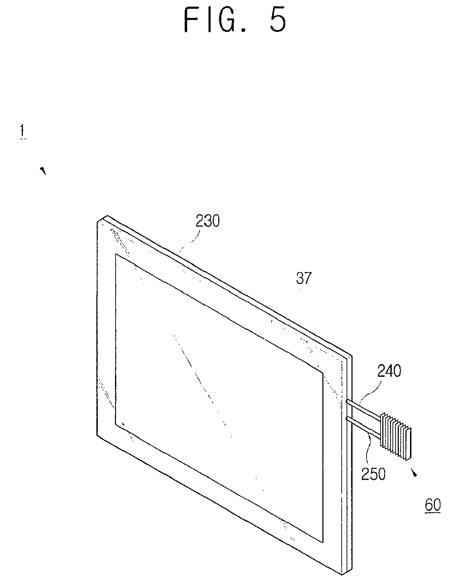

In the present embodiment, illustrated in Figures 1 to 4, both end sides of the upper heat pipe 40 and the lower heat pipe 50 are exposed to an area outside of the bottom chassis 30. Alternatively, according to an embodiment of the present general inventive concept, as illustrated in Figure 5, only one end side of the heat dissipating fins 60 and 61 may be exposed to an outer portion of a bottom chassis 230. Referring to Figure 5, the liquid crystal module 1 provides the top chassis 37 in contact with bottom chassis 230, and an exposing part 240 and a conducting part 250 which extend from one side of the liquid crystal module 1. The exposing part 240 and conducting part 250 are in thermal contact with a set of heat dissipating fins 60, which provide heat dissipation to the LED units (not shown) inside the liquid crystal module 1.

In the present embodiment, the LED units 22 and 23 and the heat pipes 40 and 50 are disposed at the upper and lower part of the light guide plate 21, alternatively, the LED units 22 and 23 and the heat pipes 40 and 50 may be disposed at lateral sides of the light guide plate 21.

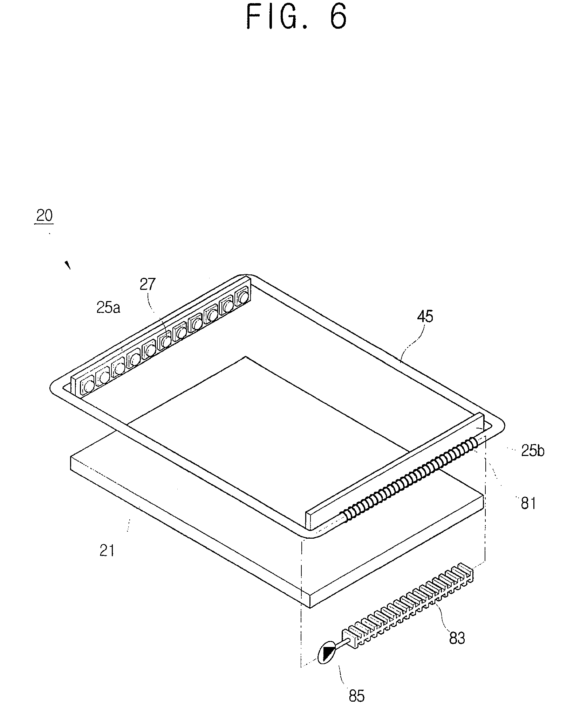

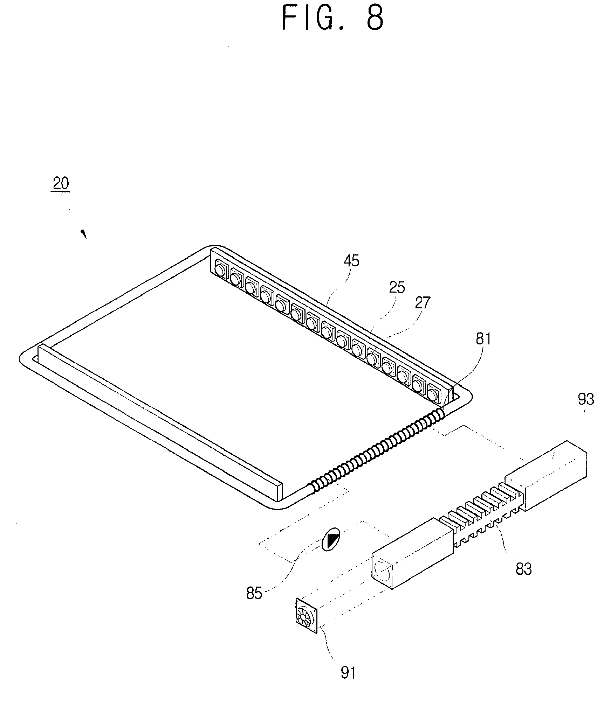

An LCD according to an embodiment of the present general inventive concept, as illustrated in Figures 6 and 8, includes a back light unit 20 having LED units 25a and 25b having a plurality of LEDs 27, a heat conductive member (not shown) in thermal contact with the LED units 25a and 25b, a cooling duct 81 in thermal contact with the heat conductive member and having a heat transfer fluid therein, a radiator 83 connected with the cooling duct 81 to receive the heat generated by the LED units 25a and 25b, and a circulating pump 85 circulating the heat transfer fluid between the cooling duct 81 and the radiator 83. Further, as illustrated in Figure 8, the LCD further includes a ventilating fan 91 to cool the radiator 83.

The heat conductive member transfers the heat generated by the LED units 25a and 25b to the cooling duct 81. The material of the heat conductive member may be composed of various materials that have heat transfer properties suitable to transfer heat from the LED units 25a and 25b, i.e., aluminum which has good heat conductivity. The heat conductive member may be one of various types to be attached with a projected heat dissipation fin to widen a heat dissipation area. Such a heat conductive member may be a heat pipe 45 having a circular or an oval shaped sectional pipe in thermal contact with the LED units 25a and 25b.

The cooling duct 81 is in thermal contact with the heat pipe 45 and is accommodated with the heat conductive fluid. The cooling duct 81 receives the heat transferred from the heat pipe 45 through thermal contact with the heat pipe 45, and cools a temperature of the heat pipe 45. Therefore, the cooling duct 81 cools the heat generated in the heat pipe 45, and the heat conductive fluid inside of the heat pipe 45 circulates and continues to maintain the LED units 25a and 25b at a lower temperature. Accordingly, the heat pipe 45 cooled by the cooling duct 81 is at a lower temperature than the LED units 25a and 25b and maintains the LED units 25a and 25 b at the lower temperature, thereby efficiently cooling the LED units 25a and 25b.

The radiator 83 is connected with the cooling duct 81 and cools the heat conductive fluid which increases in temperature when being in thermal contact with the heat pipe 45. The radiator 83 is composed of a good heat conductive material to easily discharge the heat generated by the LED units 25a and 25b, i.e., aluminum material or other materials with good heat conductivity. The radiator 83 is provided with a plurality of heat dissipation fins (not shown) to increase a contact area with the air, and may employ conventional or various different types of radiators to attain efficient cooling. As illustrated in Figure 8, the radiator 83 is provided with at least one ventilating fan 91. The radiator 83 may provide a casing 93 disposed with the ventilating fan 91 and formed to provide a pathway of the air.

The circulating pump 85 is provided between the cooling duct 81 and the radiator 83 to circulate the heat transfer fluid. The circulating pump 85 is mounted at a rear portion of the back light unit 20. The circulating pump 85 can be operated during a predetermined time after power of the LED 27 turns off.

As illustrated in Figure 8, the ventilating fan 91 is disposed at a side of the casing 93 of the radiator 83. The ventilating fan 91 ventilates the air toward the radiator 83 to cool the heat transferred from the heat pipe 45. That is, the ventilating fan 91 cools the radiator 83 by forcibly convective current, thereby rapidly transferring the heat generated at the heat pipe 45. The ventilating fan 91 may be provided in plural corresponding to a plurality of radiators 83. The ventilating fan 91 can be operated during a predetermined time after the power of the LED 27 turns off.

With this configuration, the process of heat transfer and cooling of the LCD according to an embodiment of the present general inventive concept will be described as follows.

The plurality of LEDs 27 are lighted and thereby generate heat. The heat generated from the LEDs 27 is transferred to LED units 25a and 25b provided in a rear portion of the LED 27, to thereby dissipate the generated heat. At this time, the LED units 25a and 25b are cooled by the heat pipe 45. Further, the cooling duct 81 accommodates the heat transfer fluid cooled by the ventilating fan 91 in the radiator 83, and the cooled heat transfer fluid is circulated by the circulating pump 85 to cool the heat pipe 45.

Therefore, the heat transfer fluid cools the heat pipe 45 and the LEDS 27 in thermal contact with the heat pipe 45, thereby enhancing efficiency of the LEDs 27 and reducing a temperature difference to maintain a uniform color of the LEDS. Each of the LED units 25a and 25b may further include a thermal sensor (not shown) to sense a temperature thereof, and a controller (not shown) to control a velocity of the ventilating fan 91 mounted in each radiator 83 to blow air. That is, the thermal sensor and the controller may maintain a uniform temperature among the LED units 25a and 25b.

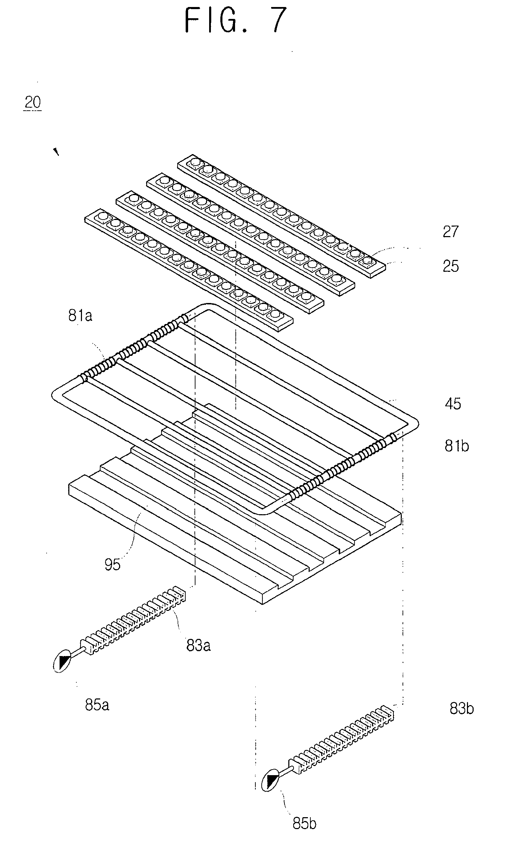

An LCD according to an embodiment of the present general inventive concept, as illustrated in Figure 7, may include a plurality of LED units 25 mounted at a rear portion of a liquid crystal panel 10 having a plurality of LEDs 27, a heat conductive member (not shown) in thermal contact with each of the LED units 25, cooling ducts 81a and 81b in thermal contact with the heat conductive member and accommodated with heat transfer fluid, radiators 83a and 83b connected with the cooling ducts 81a and 81b and receiving the heat generated by the LED units 25, a circulating pump 85 circulating the heat transfer fluid between the cooling ducts 81a and 81b and the radiators 83a and 83b. The LCD, as illustrated in Figure 8, further comprises a ventilating fan 91 to cool the radiator 83.

As illustrated in Figure 7, the LEDs 27 supplies light, which is generated at a rear portion of the back light unit 20, to a liquid crystal panel 10. The LEDs 27 are disposed at the rear of the back light unit 20 and are mounted in the plurality of LED units 25.

The LED units 25 are disposed at the rear of the liquid crystal panel 10. The LED units 25 are provided with an LED board (not shown) of a longitudinal plate shape to support and couple with the plurality of LEDs 27, and a circuit pattern (not shown) to drive the LEDs 27 at an LED board surface. Each LED 27 is disposed at the LED units 25 to be spaced apart from each other. The plurality of LED units 25 are spaced apart from each other, and are composed of a material of good heat conductivity to discharge the heat generated from the LEDs 27, i.e., aluminum or a different material with good heat conductivity.

The heat conductive member (not shown) may be provided as various materials and shapes according to the present embodiment, and may be provided as the heat pipe 45.

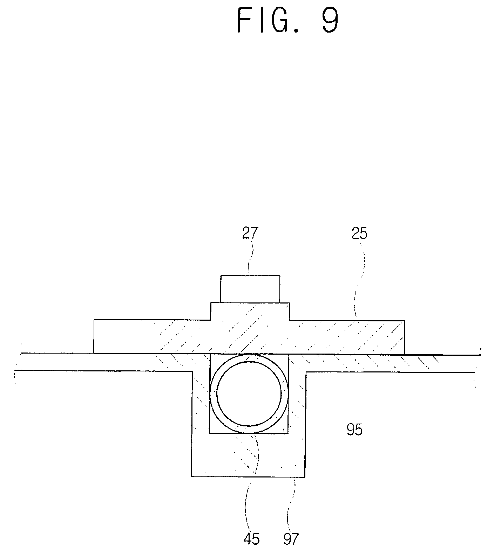

As illustrated in Figure 9, the heat pipe 45 is press-fitted into a recessed pipe holder 95 to allow an area of the heat pipe 45 in thermal contact with the heat pipe 45 to increase. The pipe holder 95 is recessed at an LED module supporter 97 supporting the LED units 25 to allow the heat pipe 45 to be press-fitted. The heat pipe 45 is provided as a circular or oval shaped pipe, which includes a working fluid inside the pipe and a seal to keep the working fluid from leaking out of the pipe. The heat pipe 45 corresponds to each row of the LED units 25 at the rear portion of the LED units 25. That is, the heat pipe 45 may be provided in plural. Therefore, the heat pipe 45 contacts the LED units 25, and at the same time, is press-fitted into the pipe holder 95, thereby uniformly cooling the LED units 25.

Although the LED 27 and the heat pipe 45 of this embodiment as illustrated in Figure 9 are disposed and arranged differently from the embodiment illustrated in FIGS. 6 and 8, the process of heat dissipation according to the embodiment of Figure 8 is similar to the embodiment of Figure 6 and 8 and will be omitted from further description.

As described above, the present general inventive concept provides the back light unit 20 using the LEDs 27, but is not limited thereto, the present general inventive concept may be used with other types of electric devices which provide different types of light sources that radiate heat.

According to the present general inventive concept, the plurality of heat dissipation fins 60 and 61 are coupled to both end sides of the heat pipes 40 and 50, so that when a sectional area of the heat pipes 40 and 50 and/or of the heat dissipation fins 60 and 61 to discharge the heat increases, the heat radiation may be accomplished more efficiently, and the ventilating fans 70 and 71 forcibly ventilate the heat conducted by the LED units 23 and 25 to the heat dissipation fins 60 and 61, thereby efficiently dissipating the heat.

Further, the present general inventive concept provides the cooling duct 81, the radiator 83, and the circulating pump 85 which are in thermal contact with the heat pipe 45, and the heat pipe 45 is in thermal contact with the LED unit 25 to dissipate the heat generated by the LEDs 27, thereby rapidly and uniformly dissipating the heat, and enhancing the efficiency of the LEDs 27, and reducing a thermal difference to maintain uniform color and temperature.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A liquid crystal display device, comprising:
a liquid crystal panel (10) to form an image;
a back light unit (20) disposed at a rear portion of the liquid crystal panel (10) and supplying light to the liquid crystal panel (10);
a bottom chassis (30) to accommodate the back light unit (20); and
a heat pipe (40, 50) to dissipate heat generated from the back light unit (20) to an outside of the bottom chassis (30).

2. The liquid crystal display device of claim 1, wherein the back light unit (20) comprises:
a light guide plate (21) having at least one incident plane (21a, 21b); and
a LED unit (22, 23) disposed along an incident plane of the light guide plate (21) and supplying the light to the liquid crystal panel (10).

3. The liquid crystal display device of claim 2, wherein the heat pipe (40, 50) comprises:
at least one area thereof (41) that contacts a front surface of the LED unit (22, 23); and
at least one end part (42) exposed to the outside of the bottom chassis (30).

4. The liquid crystal display device according to claim 3, wherein:
the incident plane of the light guide plate (21) comprises a pair of incident planes (21a, 21b) disposed opposite each other with respect to a center portion of the light guide plate (21); and
the heat pipe (40, 50) comprises a pair of heat pipes (40, 50) corresponding to the respective incident planes (21a, 21b).

5. The liquid crystal display device according to claim 4, wherein the incident plane (21a, 21b) of the light guide plate (21) comprises:
an upper incident plane (21a) and a lower incident plane (21b) vertically disposed; and
the heat pipe (40, 50) is provided at a side of the upper incident plane (21a) and coupled with the LED unit (22, 23) in an approximately parallel manner.

6. The liquid crystal display device according to claim 5, wherein the heat pipe (50) provided at the lower incident plane (21b) comprises:
a first conductive part (51) that contacts with the front surface of the LED unit (22, 23) to transfer the heat generated from the LED unit (22, 23);
a second conductive part (52, 53) upwardly extended from the first conductive part (51) and contacting a surface of the LED unit (22, 23) adjacent to each incident plane (21a, 21b) of the light guide plate (21); and
a third conductive part (54, 55) extended from the second conductive part (52, 53) and exposed to the outside of the bottom chassis (30).

7. The liquid crystal display device according to claim 6, wherein:
the light guide plate (21) is provided as a rectangle shape; and
the second conductive part (52, 53) comprises a pair of second conductive parts (52, 53) that contact both lateral surfaces adjacent to the respective incident planes; and
the third conductive part (54, 55) comprises a pair of third conductive parts (54, 55) corresponding to the respective second conductive parts (52, 53).

8. The liquid crystal display device according to claim 7, further comprising:
a plurality of heat dissipation fins (60, 61) coupled with both end sides of respective heat pipes (40, 50).

9. The liquid crystal display device according to claim 8, further comprising:
at least one heat ventilating fan (70, 71) mounted adjacent to at least one of the heat dissipation fins 60, 61).

10. A liquid crystal display device, comprising:
a back light unit (20) having an LED unit (25a, 25b) having one or more LEDs (27);
a heat conductive member (45) in thermal contact with the LED unit (25a, 25b) of the back light unit (20);
a cooling duct (81) in thermal contact with the heat conductive member (45) and accommodated with a heat transfer fluid;
a radiator (83) connected with the cooling duct (81) to receive heat from the cooling duct (81); and
a circulating pump (85) that circulates the heat transfer fluid between the cooling duct (81) and the radiator (83).

11. The liquid crystal display device according to claim 10, further comprising:
a ventilating fan (91) that cools the radiator (83).

12. The liquid crystal display device according to claim 10 or 11, wherein the heat conductive member comprises a heat pipe (45).

13. The liquid crystal display device according to claim 10, 11, or 12 wherein the cooling duct (81), the radiator (83), and the pump (85) are provided as at least two of each.

14. The liquid crystal display device according to claim 12, further comprising:
a module supporter (97) to support the heat pipe (45) with respect to the LED unit (25a, 25b); and
a pipe holder (95) disposed between the heat pipe (45) and one of the LED unit (25a, 25b) and the module supporter (97) and is depressed to press-fit the heat pipe (45) to increase an area heat-transferred with the heat pipe (45).

15. The liquid crystal display device according to any of claims 10 to 14 further comprising:
a pipe holder (95) formed with depressions to press-fit the heat conductive member (45) and to increase an area heat-transferred with the heat conductive member (45).

16. A liquid crystal display device comprising:
a back light unit (20) having an LED unit (25a, 25b) having a plurality of LEDs (27);
at least one heat conductive member (45) in thermal contact with the LED unit (25a, 25b);
at least one set of heat dissipation fins (60, 61) in thermal contact with the heat conductive member (45) to dissipate heat generated by the LED unit (25a, 25b); and
at least one ventilating fan (70, 71) disposed adjacent to the at least one set of heat dissipation fins (60, 61) to circulate air and dissipate heat to an outside of the liquid crystal display device.

17. A display device comprising:
one or more covers (80, 90);
a display module (1) disposed within an inside space provided by the one or more covers (80, 90), and having a back light unit (20) to generate light and a panel (10) to form an image using the light, the back light unit (20) having a light source (22, 23) to emit the light and a light guide panel (21) to guide the emitted light to the panel (21); and
a cooling unit (40, 50, 60, 70) disposed around the back light unit (20) to discharge heat generated from at least one of the light source (22, 23) and the light guide panel (21) to an outside of the display module (1).

18. The display device of claim 17, wherein the display module (1) comprises a chassis (30) to accommodate the back light unit (20), and the cooling unit (40, 50, 60, 70) comprises a first cooling member (40, 50) disposed between the back light unit (20) and the chassis to receive the heat, and a second cooling member (60) extended from the first cooling member (40, 50) and disposed outside the display module (1) to discharge the heat.

19. The display device of claim 17 or 18, wherein the cooling unit (40, 50, 60, 70) comprises a portion (42, 43) protruding from the display module (1) to discharge the heat outside the display module (1).

20. The display device of claim 19, further comprising:
an airing hole formed on the one or more covers (80, 90); and
a fan (70, 71) disposed between the airing hole and the portion (42, 43) such that the heat from the portion (42, 43) is discharged to an outside of the display device through the airing hole.
